# EUROPÄISCHE PATENTANMELDUNG

(11) **EP 2 605 189 A2**
(43) Veröffentlichungstag der Anmeldung: **19.06.2013**
(21) Anmeldenummer: 12185218.0
(22) Anmeldetag: 20.09.2012
(51) Int. Cl.: G06K 19/077, B65D 1/24, B65D 25/20

(54) **Transponderanordnung für die Integration in einem Objekt**

(30) Priorität: 13.12.2011 DE 102011120859
(71) Anmelder: Felix Schoeller Supply Chain Technologies GmbH & Co. KG, 49086 OsnaBrück (DE)
(72) Erfinder: Rademacher, Horst, 49179 Ostercappeln (DE); Suleck, Ingo, 49078 Osnabrück (DE)
(74) Vertreter: Cohausz & Florack

(57) **Zusammenfassung**

Die Erfindung betrifft eine Transponderanordnung (22) für die Integration in einem Objekt (26), umfassend mindestens ein flexibles Trägerelement (4) mit zumindest einer Transpondereinrichtung (2), welche mindestens eine Antennenstruktur (6) aufweist, ein Transponderaufnahmeelement (12) zum Umschließen des flexiblen Trägerelements (4), wobei das Transponderaufnahmeelement (12) eine bestimmte Form aufweist, und wobei das flexible Trägerelement (4) derart umgeformt ist, dass das flexible Trägerelement (4) innerhalb des Transponderaufnahmeelements (12) angeordnet ist.

## Beschreibung

Die Erfindung betrifft eine Transponderanordnung für die Integration in einem Objekt. Darüber hinaus betrifft die Erfindung ein Objekt mit einer integrierten Transponderanordnung und ein Verfahren zur Herstellung einer Transponderanordnung.

In der heutigen Zeit können Gegenstände oder Personen mit einem so genannten Radio Frequency Identification (RFID) Transponder versehen werden, um die Gegenstände bzw. Personen zu identifizieren und/oder zu überwachen. Beispielsweise kann ein Objekt in einem Produktionsprozess mit einem RFID Transponder versehen werden, um den Weg des Objekts zu verfolgen.

In dem RFID Transponder können beispielsweise Daten des Gegenstands bzw. der Person, wie Identifikationsdaten, Zugangsdaten, Passwörter, Verlaufsdaten, etc., gespeichert sein und insbesondere berührungslos ausgelesen werden.

Ein RFID Transponder weist zum Senden und Empfangen von Daten eine Antennenstruktur auf. Die Antennenstruktur kann insbesondere eine Antenne sein und mit einem Anpassungsnetzwerk leitfähig, kapazitiv oder induktiv gekoppelt sein. Die Antenne und/oder das Anpassungsnetzwerk weisen eine bestimmte Geometrie auf, wobei unterschiedliche Antennenarten durch unterschiedliche Geometrien gekennzeichnet sind.

Ferner kann ein RFID Transponder eine mit der Antennenstruktur elektrisch verbindbare Schaltungsanordnung aufweisen. Die Schaltungsanordnung kann einen analogen Schaltkreis zum Empfangen und Senden (Transceiver) von Daten, einen digitalen Schaltkreis, wie beispielweise einen Mikrocontroller, und eine Speichereinrichtung aufweisen.

Ein derartiger RFID Transponder kann in einem RFID Kommunikationssystem eingesetzt werden. Ein RFID Kommunikationssystem kann neben zumindest einem RFID Transponder zumindest eine Lese- und/oder Schreibeinrichtung umfassen. Die Lese- und/oder Schreibeinrichtung kann beispielsweise ein hochfrequentes elektromagnetisches Wechselfeld erzeugen. Gelangt der passive oder aktive RFID Transponder in dieses Feld, dann empfängt der RFID Transponder das Signal über die Antennenstruktur. Der RFID Transponder kann durch das empfangene elektromagnetische Wechselfeld aktiviert werden. Die in dem ausgesendeten Feld enthaltenen Informationen können decodiert werden. In Abhängigkeit der decodierten Informationen kann der RFID Transponder entsprechende Anweisungen ausführen und beispielsweise Daten an die Lese- und/oder Schreibeinrichtung mittels der Antennenstruktur senden.

Ferner kann es in Abhängigkeit des Objekts, an welchem die Transponderanordnung angebracht wird, erforderlich sein, dass aus optischen und/oder Sicherheitsgründen die Transponderanordnung in dem Objekt integrierbar ist. Mit anderen Worten ist die Transponderanordnung von einer Außenwand des Objekts überdeckt und/oder ragt zumindest nicht aus dieser hervor. Ein stetiges Anliegen ist es hierbei, Transponderanordnungen zur Verfügung zu stellen, welche eine kompakte Bauform aufweisen und somit nur einen geringen Platz innerhalb des Objekts einnehmen.

Eine Transpondereinrichtung mit einer kompakten Bauform ist aus der DE 20 2010 011 285 U1 bekannt. Diese Druckschrift beschreibt eine Transpondereinrichtung, welche aus einem IC-Baustein und einer Sende/Empfangsantenne besteht. Hierbei sind der IC-Baustein und die Sende/Empfangsantenne magnetisch gekoppelt und somit galvanisch voneinander entkoppelt. Die Sende/Empfangsantenne, also die Antennenstruktur, ist als separates Bauteil gebildet und weist eine rohrförmige Form auf. Gemäß dem Stand der Technik ist die Antennenstruktur vorzugsweise als Spirale gebildet. Die Sende/Empfangsantenne ist dabei eine Dipolantenne, welche aufgrund der Spiralform eine kompakte Bauform aufweist.

Zwar wird durch eine spiralförmige Antennenstruktur eine kompakte Bauform der Transponderanordnung erzielt. Nachteilig an dieser Transpondereinrichtung ist jedoch, dass die Herstellung insbesondere der Antennenstruktur aufwendig und komplex ist. Grund hierfür ist, dass für eine ausreichende Sendereichweite die Maße der Antennenstruktur, wie die Breite, Länge, Dicke der Antennenstruktur, mit einer hohen Genauigkeit bei der Herstellung eingehalten werden müssen. Ferner ist die Transponderanordnung nicht vor mechanischen und/oder chemischen Einflüssen ausreichend geschützt.

Es ist daher die Aufgabe der vorliegenden Erfindung, eine Transponderanordnung zur Integration in einem Objekt zur Verfügung zu stellen, welche in einfacher Weise herstellbar ist und gleichzeitig eine kompakte Bauform aufweist.

Die zuvor hergeleitete und aufgezeigte Aufgabe wird gemäß einem ersten Aspekt der Erfindung durch eine Transponderanordnung gemäß dem Patentanspruch 1 gelöst. Die Transponderanordnung für die Integration in einem Objekt umfasst mindestens ein flexibles Trägerelement mit zumindest einer Transpondereinrichtung. Die Transpondereinrichtung weist mindestens eine Antennenstruktur auf. Die Transponderanordnung umfasst ein Transponderaufnahmeelement zum Umschließen des flexiblen Trägerelements, wobei das Transponderaufnahmeelement eine bestimmte Form aufweist. Das flexible Trägerelement ist derart umgeformt, dass das flexible Trägerelement innerhalb des Transponderaufnahmeelements angeordnet ist.

Im Gegensatz zum Stand der Technik wird erfindungsgemäß in einfacher Weise eine kompakte Transponderanordnung bereitgestellt, indem durch Umformen eines flexiblen Trägerelements samt Transpondereinrichtung das Trägerelement in eine kompakte Form gebracht wird, so dass es in einer geeigneten Umhüllung angeordnet werden kann, welche ebenfalls eine bestimmte und insbesondere kompakte Form aufweist.

Die Transponderanordnung kann insbesondere für die Integration in einem Objekt, wie einem Getränkekasten, verwendet werden.

Die Transponderanordnung weist ein flexibles und aus einem nicht leitfähigen Material gebildetes Trägerelement auf. Beispielsweise kann ein geeignetes Kunststoffmaterial eingesetzt werden. Das Trägerelement umfasst eine Transpondereinrichtung. Vorteilhafterweise ist die Transpondereinrichtung eine Ultra-High-Frequency (UHF) Transpondereinrichtung (860 MHz bis 960 MHz). Insbesondere kann eine geeignete integrierte Schaltung vorgesehen sein, welche elektrisch über ein Anpassungsnetzwerk mit einer Antennenstruktur verbunden ist.

Die Antennenstruktur kann insbesondere eine Dipolantenne sein. Dipolantennen eignen sich aufgrund ihres einfachen Aufbaus und ihrer einfachen Betriebsweise in besonders vorteilhafter Weise als Antennen für RFID Transponder. Grundsätzlich ist die Verwendung einer Vielzahl von unterschiedlichen Dipolantennen, wie einer mäanderförmigen Antenne, einer Bowtie-Antenne, einer Monopolantenne, einer planaren log.- periodischen Antenne, einer Vivaldi Antenne, einer Spiralantenne oder einer differentiellen elliptischen Antenne für eine (breitbandige) Antenne möglich. Die Transpondereinrichtung kann zumindest teilweise durch Bedrucken auf das flexible Trägerelement aufgebracht sein. Alternativ oder zusätzlich können Fertigungsverfahren, wie Ätzen, Stanzen oder Lasern zum Erzeugen einer Antennenstruktur eingesetzt werden. Ein entsprechendes Trägerelement samt Transpondereinrichtung kann in einfacher Weise mit gleichbleibender Qualität hergestellt werden. Insbesondere ist eine Massenfertigung möglich.

Darüber hinaus weist die Transponderanordnung ferner ein Transponderaufnahmeelement auf. Das Transponderaufnahmeelement kann ein- oder mehrteilig gebildet sein und umschließt das Trägerelement bevorzugt vollständig. Das Transponderaufnahmeelement ist insbesondere ein Schutzelement. Es kann dazu dienen, die Transpondereinrichtung vor Umwelteinflüssen zu schützen. Insbesondere kann das Transponderaufnahmeelement einen Schutz gegenüber mechanischen und chemischen Einflüssen bereitstellen.

Hierbei weist das Transponderaufnahmeelement eine bestimmte Form auf. Die Form kann vorgebbar sein. Die Form des Transponderaufnahmeelements kann insbesondere in Abhängigkeit des Objekts, in das die Transponderanordnung integriert werden soll, vorgegeben sein.

Es ist erkannt worden, dass eine kompakte Transponderanordnung hergestellt wird, wenn das Trägerelement umgeformt wird. Unter Umformen ist beispielsweise ein Biegen und/oder Falten des Trägerelements zu verstehen. Insbesondere kann hierdurch die Ausdehnung des Trägerelements in zumindest eine Raumrichtung reduziert werden. Die Umformung kann derart sein, dass das Trägerelement in das Transponderaufnahmeelement, welches selbst kompakt gebildet ist, einsetzbar ist. Mit anderen Worten ist ohne eine Umformung ein Integrieren des Trägerelements in das Transponderaufnahmeelement nicht möglich. Das Transponderaufnahmeelement verhindert ferner, dass das Trägerelement beispielsweise aufgrund einer Elastizität des Trägerelements wieder in die Ausgangslage gelangt.

In einfacher Weise kann eine kompakte Transponderanordnung bereitgestellt werden. Neben einer kompakten Ausbildung kann gleichzeitig ein ausreichender Schutz der Transpondereinrichtung vor chemischen und/oder mechanischen Einflüssen durch das Transponderaufnahmeelement, welches die Transpondereinrichtung umschließt, sichergestellt werden. Grundsätzlich kann das Trägerelement eine beliebige Form aufweisen, so lange diese dazu geeignet ist, dass die (gesamte) Transpondereinrichtung auf dem Trägerelement angebracht sein kann. Vorzugsweise kann es sich um ein flächiges und insbesondere rechteckförmiges Element mit einer bestimmten Breite und einer bestimmten Länge handeln, wobei die Maße insbesondere von der Form der Antennenstruktur abhängen können. Gemäß einer ersten Ausführungsform der erfindungsgemäßen Transponderanordnung kann das flexible Trägerelement derart umgeformt sein, dass die Länge und/oder die Breite des flexiblen Trägerelements im Vergleich zu der Länge und/oder Breite des flexiblen Trägerelements in einer Ausgangsform reduziert ist/sind. Unter der Ausgangsform bzw. Ausgangslage des Trägerelements ist insbesondere eine Form bzw. Lage zu verstehen, die sich nach einer Herstellung des Trägerelements ohne weitere Umformschritte ergibt. Das Trägerelement kann vorzugsweise als Ausgangsform eine ebene und flächige Form aufweisen. Durch die Reduktion zumindest eines Ausdehnungsmaßes des flexiblen Trägerelements kann in einfacher Weise eine kompakte Bauform erzielt werden.

Grundsätzlich kann auch das Transponderaufnahmeelement beliebig gebildet sein. Gemäß einer bevorzugten Ausführungsform kann das Transponderaufnahmeelement ein Hohlkörper sein. Insbesondere kann ein dünnwandiger Hohlkörper vorgesehen sein. Beispielsweise kann die Dicke einer Wand im Bereich von 0,1 mm bis 2 mm liegen. Der Hohlkörper kann kompakt gebildet sein. Insbesondere kann der Hohlkörper derart gebildet sein, dass das flexible Trägerelement vollständig (nach Umformung) von dem Hohlkörper umschlossen ist. Vollständig bedeutet, dass kein Ende bzw. keine Seite des Trägerelements hinausragt. Es ist bevorzugt, dass ein Ende des flexiblen Trägerelements bündig mit der zumindest einen Öffnung des Hohlkörpers abschließt. Mit anderen Worten kann der Hohlkörper gerade so groß gebildet sein, dass das flexible Trägerelement vollständig umschlossen werden kann. Eine besonders kompakte Transponderanordnung kann bereitgestellt werden.

Wie bereits beschrieben wurde, kann das Transponderaufnahmeelement, also die Schutzumhüllung, beliebig geformt sein. Vorzugsweise kann die bestimmte Form des Transponderaufnahmeelements zu der Form einer Aufnahme eines Objekts korrespondieren, in der die Transponderanordnung einsetzbar ist bzw. eingesetzt werden soll. Ein Objekt kann insbesondere ohnehin einen Hohlraum zur Gewichtsreduzierung aufweisen. Ein solches Objekt kann in einfacher Weise mit einer Transponderanordnung nachgerüstet werden, wenn die Form des Transponderaufnahmeelements derart gebildet ist, dass sie zu dem ohnehin vorgesehenen Hohlraum korrespondiert. Es versteht sich, dass eine Aufnahme auch nachträglich in das Objekt eingebracht werden kann. In diesem Fall können die Form der Aufnahme im Objekt und die Form des Transponderaufnahmeelements besonders einfach aufeinander abgestimmt werden.

Gemäß einer bevorzugten Ausführungsform der erfindungsgemäßen Transponderanordnung kann das Transponderaufnahmeelement quaderförmig sein. Alternativ kann das Transponderaufnahmeelement zylinderförmig sein. Gerade diese beiden Aufnahmeformen, insbesondere entsprechende Hohlkörper, können in einfacher Weise hergestellt und in (ohnehin) vorgesehene Hohlräume eingesetzt werden. Es versteht sich, dass ein Transponderaufnahmeelement auch mehreckig, beispielsweise dreieckförmig, oder elliptisch geformt sein kann.

Darüber hinaus kann gemäß einer anderen Ausführungsform der erfindungsgemäßen Transponderanordnung das Trägerelement zumindest teilweise an einer Innenwand des Transponderaufnahmeelements anliegen. Vorzugsweise kann das Trägerelement entsprechend der Innenform des Transponderaufnahmeelements, insbesondere eines zuvor beschriebenen Hohlkörpers, umgeformt sein und an der Innenwand anliegen. Mit anderen Worten kann durch die Form der Innenwand die (endgültige) Form des Trägerelements innerhalb des Transponderaufnahmeelements vorgegeben werden. Beispielsweise kann das flexible Trägerelement zu einem Hohlzylinder gerollt werden und in ein zylinderförmiges Transponderaufnahmeelement eingesetzt werden. Bevorzugt können sich dabei die Enden des Trägerelements berühren oder leicht überlappen, so dass eine größtmögliche Kompaktheit erzielt werden kann. Es versteht sich, dass sich die Antennenstruktur, insbesondere das Anpassungsnetzwerk, nicht überlappen bzw. überlagern darf, um einen fehlerfreien Datenaustausch zu gewährleisten. Bei einem quaderförmigen Transponderaufnahmeelement kann das Trägerelement entsprechend quaderförmig gefaltet sein. Auch hierbei können sich die Enden des Trägerelements bevorzugt berühren.

Vorzugsweise können die Ecken in einem eckigen Transponderaufnahmeelement Radien aufweisen, um ein Anliegen des Trägerelements an der Innenwand zu ermöglichen. Insbesondere kann hierdurch vermieden werden, dass durch zu starkes Biegen die Transpondereinrichtung beschädigt wird. Für eine erhöhte Stabilität der Transponderanordnung kann gemäß einer weiteren Ausführungsform der erfindungsgemäßen Transponderanordnung ein Kernelement vorgesehen sein, welches innerhalb des Transponderaufnahmeelements angeordnet ist. Das Kernelement kann derart gebildet sein, dass ein Hohlraum in dem Transponderaufnahmeelement umfassend das Trägerelement nahezu vollkommen ausgefüllt ist. Es kann insbesondere aus einem stabilen und festem Material gebildet sein. Alternativ kann auch eine zähflüssige Masse, wie eine Paste, als Kernelement vorgesehen sein. Auch kann ein Hohlraum mit einer zunächst flüssigen Masse gefüllt werden, welche anschließend beispielsweise durch eine Aktivierung zu einer festen Masse erstarrt. Hierdurch können Hohlräume nahezu vollständig ausgefüllt werden. Wenn das Trägerelement nahezu vollständig an der Innenwand anliegt, kann der durch die Innenseite des Trägerelements gebildete Hohlraum nahezu vollständig durch ein Kernmaterial bzw. Kernelement ausgefüllt sein. Durch Ausfüllen eines Hohlraums kann die Stabilität signifikant verbessert werden.

Es ist erkannt worden, dass nicht nur die Stabilität der Transponderanordnung durch ein Kernelement erhöht werden kann, sondern dass zusätzlich die Leistung der Transponderanordnung, insbesondere die Sendereichweite bei kleiner Geometrie, verbessert werden kann, wenn das Kernelement aus einem speziellen Material gebildet ist. Gemäß einer bevorzugten erfindungsgemäßen Ausführungsform kann das Kernelement aus einem Material mit einer relativen Permittivität von zumindest größer als 1, vorzugsweise zumindest größer als 2, in einem Frequenzbereich von 860 MHz bis 960 MHz hergestellt sein. Beispielhafte Materialien sind entsprechend gebildete Kunststoffmaterialien, wie PMMA, PET oder Teflon. Auch haben sich Sande und Titandioxid als leistungssteigernd erwiesen.

Gemäß einer weiteren Ausführungsform kann das Transponderaufnahmeelement ein Verlängerungselement aufweisen. Das Verlängerungselement dient insbesondere nicht zur Aufnahme des Trägerelements. Das Verlängerungselement kann vorgesehen sein, um die Anordnung der Transponderanordnung in einem Objekt an einer speziellen Position zu ermöglichen oder zumindest zu erleichtern. Es kann beispielsweise stabförmig gebildet sein.

Darüber hinaus kann gemäß einer bevorzugten Ausführungsform das Transponderaufnahmeelement mindestens einen Widerhaken aufweisen. Vorzugsweise kann eine Mehrzahl an Widerhaken vorgesehen sein. Alternativ oder zusätzlich kann, falls ein Verlängerungselement vorgesehen ist, das Verlängerungselement mindestens einen Widerhaken, vorzugsweise eine Mehrzahl von Widerhaken, aufweisen. Mittels eines Widerhakens kann die Transponderanordnung in besonders einfacher und sicherer Weise in einen Hohlraum eines Objekts, wie einem Getränkekasten, fixiert werden.

Ein weiterer Aspekt der Erfindung ist ein Objekt mit mindestens einer integrierten zuvor beschriebenen Transponderanordnung. Hierbei kann die Transponderanordnung von dem Objekt vollständig umschlossen sein. Bei dem Objekt kann es sich beispielsweise um einen Getränkekasten oder um ein Getränkefass handeln.

Ein noch weiterer Aspekt der Erfindung ist ein Verfahren zur Herstellung einer Transponderanordnung gemäß dem

Patentanspruch 10. Das Verfahren umfasst:
- Bereitstellen von mindestens einem flexiblen Trägerelement mit zumindest einer Transpondereinrichtung, welche mindestens eine Antennenstruktur aufweist, in einer Ausgangsform,
- Bereitstellen eines Transponderaufnahmeelements zum Umschließen des Trägerelements, wobei das Transponderaufnahmeelement eine bestimmte Form aufweist,
- Umformen des Trägerelements aus der Ausgangsform in eine Endform, und
- anschließendes Einführen des Trägerelements in der Endform in das Transponderaufnahmeelement.

Das Verfahren kann insbesondere zur Herstellung einer zuvor beschriebenen Transponderanordnung verwendet werden.

Zunächst kann ein vorgefertigtes Trägerelement mit einer Transpondereinrichtung bereitgestellt werden. Wie bereits beschrieben wurde, umfasst die Transpondereinrichtung vorzugsweise eine Antennenstruktur, ein Anpassungsnetzwerk und eine integrierte Schaltung. Die Transpondereinrichtung, insbesondere eine UHF Transpondereinrichtung, kann hinsichtlich des Hüllmaterials, wie einem bereitgestellten Transponderaufnahmeelement, optimiert werden. Beispielsweise können geometrische Parameter der Antennenstruktur, wie die Länge oder Breite, an einen Materialparameter des Transponderaufnahmeelements, wie einer gemessenen und/oder berechneten relativen Permittivität oder relativen Permeabilität, angepasst sein.

Ferner kann ein Transponderaufnahmeelement bereitgestellt werden, dessen Form insbesondere zu einer Aufnahme eines Objekts, in welches die Transpondereinrichtung eingesetzt werden soll, korrespondieren kann. Das Transponderaufnahmeelement ist insgesamt kompakt gebildet.

Das Trägerelement, welches in einer Ausgangsform zur Verfügung gestellt wird, wird dann derart umgeformt, dass es in das Transponderaufnahmeelement eingesetzt werden kann. Insbesondere wird durch die Umformung, wie ein Biegen und/oder Falten, zumindest ein geometrisches Maß des Trägerelements reduziert.

Das umgeformte Trägerelement wird dann in das Transponderaufnahmeelement eingesetzt. Beispielsweise kann das Trägerelement in das Transponderaufnahmeelement derart angeordnet werden, dass es an der Innenwand anliegt. Es versteht sich hierbei, dass zunächst eine stärkere Umformung, beispielsweise Biegung des Trägerelements erfolgen kann und sich das Trägerelement aufgrund der Elastizität anschließend an die Innenwand des Transponderaufnahmeelements anlegen kann.

In einfacher Weise kann eine kompakte Transponderanordnung mit einer Schutzumhüllung hergestellt werden.

Darüber hinaus kann ein Kommunikationssystem vorgesehen sein. Das Kommunikationssystem umfasst zumindest eine zuvor beschriebene Transponderanordnung, welche in einem Objekt integriert ist. Das Kommunikationssystem umfasst ferner eine Leseeinrichtung zum Auslesen der Transpondereinrichtung. Die Leseeinrichtung kann ein elektromagnetisches Feld aussenden und dazu eingerichtet sein, sämtliche Transpondereinrichtungen, welche sich innerhalb des Feldes befinden, auszulesen. Die ausgelesenen Daten können beispielsweise einer Recheneinrichtung zur weiteren Ausarbeitung zur Verfügung gestellt werden.

Es gibt nun eine Vielzahl von Möglichkeiten, die erfindungsgemäße Transponderanordnung, das erfindungsgemäße Objekt und das erfindungsgemäße Verfahren zur Herstellung einer Transponderanordnung auszugestalten und weiterzubilden. Hierzu sei einerseits verwiesen auf die dem Hauptanspruch nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels einer auf einem Trägerelement angeordneten Transpondereinrichtung gemäß der vorliegenden Erfindung in einer Ausgangsform,
- Fig. 2a: eine schematische Ansicht eines ersten Ausführungsbeispiels eines Transponderaufnahmeelements gemäß der vorliegenden Erfindung,
- Fig. 2b: eine schematische Ansicht eines weiteren Ausführungsbeispiels eines Transponderaufnahmeelements gemäß der vorliegenden Erfindung,
- Fig. 2c: eine schematische Ansicht eines weiteren Ausführungsbeispiels eines Transponderaufnahmeelements gemäß der vorliegenden Erfindung,
- Fig. 2d: eine schematische Ansicht eines weiteren Ausführungsbeispiels eines Transponderaufnahmeelements gemäß der vorliegenden Erfindung,
- Fig. 2e: eine schematische Ansicht eines weiteren Ausführungsbeispiels eines Transponderaufnahmeelements gemäß der vorliegenden Erfindung,
- Fig. 2f: eine schematische Ansicht eines weiteren Ausführungsbeispiels eines Transponderaufnahmeelements gemäß der vorliegenden Erfindung,
- Fig. 3a: eine schematische Ansicht eines ersten Ausführungsbeispiels einer Transponderanordnung gemäß der vorliegenden Erfindung,
- Fig. 3b: eine schematische Ansicht eines weiteren Ausführungsbeispiels einer Transponderanordnung gemäß der vorliegenden Erfindung,
- Fig. 4a: eine schematische Ansicht eines weiteren Ausführungsbeispiels einer Transponderanordnung gemäß der vorliegenden Erfindung,
- Fig. 4b: eine schematische Ansicht eines weiteren Ausführungsbeispiels einer Transponderanordnung gemäß der vorliegenden Erfindung,
- Fig. 5: ein Flussdiagramm eines Ausführungsbeispiels eines Verfahrens gemäß der Erfindung zur Herstellung einer Transponderanordnung, und
- Fig. 6: eine schematische Ansicht eines Ausführungsbeispiels eines Objekts gemäß der Erfindung.

Nachfolgend werden gleiche Bezugszeichen für gleiche Elemente verwendet.

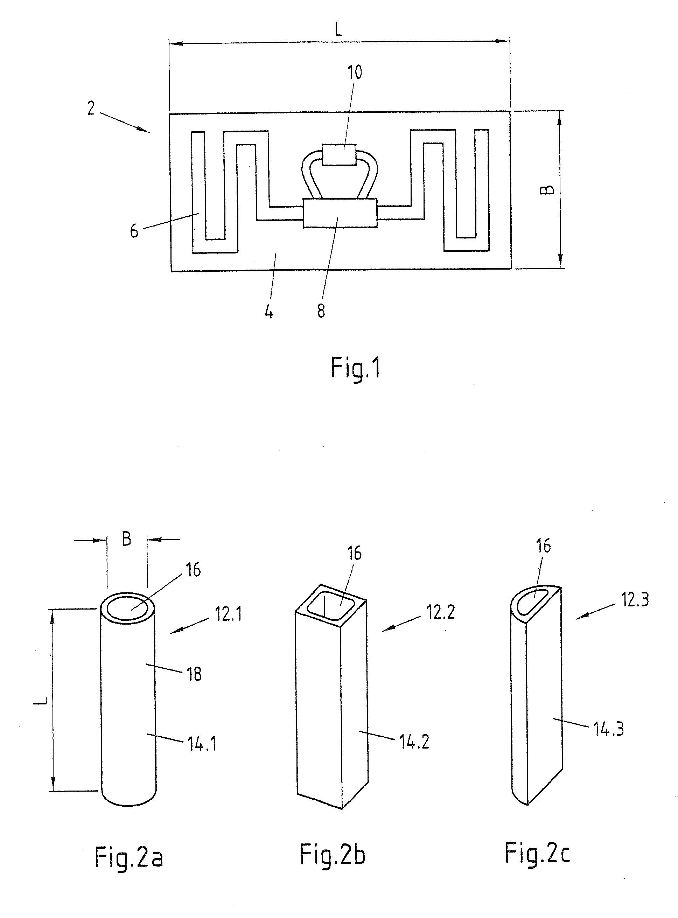

Figur 1 zeigt ein Ausführungsbeispiel einer auf einem Trägerelement 4 angeordneten Transpondereinrichtung 2 gemäß der vorliegenden Erfindung. Im vorliegenden Ausführungsbeispiel ist ein flexibles Trägerelement 4 vorgesehen. Das Trägerelement 4 kann insbesondere aus einem nicht leitenden Material gebildet sein. Vorteilhafterweise kann das Trägerelement 4 aus einem Kunststoffmaterial hergestellt sein. Es versteht sich, dass gemäß anderen Varianten der Erfindung auch andere flexible Materialien, wie Papier, Textilien oder dergleichen, eingesetzt werden können.

Auf dem Trägerelement 4 ist eine Transpondereinrichtung 2 angeordnet. Die dargestellte Transpondereinrichtung 2 umfasst eine Antennenstruktur 6, ein Anpassungsnetzwerk 8 und einen integrierten Schaltkreis 10. Der integrierte Schaltkreis 10 kann mit dem Anpassungsnetzwerk 8 leitfähig verbunden sein. Ferner kann das Anpassungsnetzwerk 8 leitfähig, induktiv oder kapazitiv mit der Antennenstruktur 6 gekoppelt sein. Eine elektrische Kopplung bzw. eine galvanische Kopplung der Antennenstruktur 6 und des integrierten Schaltkreises 10 ist aufgrund einer erhöhten Leistung bevorzugt. Grundsätzlich wäre jedoch eine magnetische Kopplung zwischen den Komponenten denkbar.

Die Antennenstruktur 6 kann insbesondere als eine Dipolantenne mit zwei leitfähigen geteilten Polabschnitten gebildet sein. Vorliegend ist eine spiralförmige Antennenstruktur 6 vorgesehen. Diese eignet sich aufgrund des kompakten Designs besonders gut. Die Polabschnitte können insbesondere symmetrisch zueinander gebildet sein. Bei dem abgebildeten Anpassungsnetzwerk 8 handelt es sich insbesondere um ein T-Anpassungsnetzwerk.

Darüber hinaus können die geometrischen Maße der Antennenstruktur 6 und/oder des Anpassungsnetzwerks 8 an ein Hüllmaterial angepasst sein. Hierbei ist unter dem Hüllmaterial vorzugsweise sämtliches Material zu verstehen, welches die Transpondereinrichtung im verbauten Zustand, also im Objekt, umschließt. Hierzu zählen insbesondere ein Kernelement, das Transponderaufnahmeelement und/oder das Objekt bzw. die Objektwand. Vorzugsweise können Materialparameter des Hüllmaterials, welche die Transmission von elektromagnetischen Wellen beeinflussen, wie eine relative Permittivität und/oder eine relative Permeabilität und/oder eine Materialstärke des Hüllmaterials, berücksichtigt werden. Es versteht sich, dass die Materialparameter eines Transponderaufnahmeelements und/oder des Kernelements ermittelt werden können.

Bei der Transpondereinrichtung 2 kann es sich insbesondere um eine Ultra-High-Frequency (UHF) Transpondereinrichtung 2 handeln (860 MHz bis 960 MHz), welche erhöhte Lesereichweiten im Vergleich zu Transpondereinrichtungen, welche in niedrigeren Frequenzbereichen arbeiten, aufweist.

Das Trägermaterial 4 umfassend die Transpondereinrichtung 2 kann in beliebiger Weise hergestellt sein. Beispielsweise kann die Transpondereinrichtung 2 zumindest teilweise durch Bedrucken des Trägerelements 4 aufgebracht sein. Insbesondere erlaubt dies eine Massenfertigung.

In den Figuren 2a bis 2e sind beispielhafte Ausführungsbeispiele von Transponderaufnahmeelementen 12 abgebildet. Wie aus diesen beispielhaften Figuren zu erkennen ist, sind die Transponderaufnahmeelemente 12 als Hohlkörper 14 gebildet.

In der Figur 2a ist das Transponderaufnahmeelement 12.1 als zylinderförmiger Hohlkörper 14.1 gebildet. Der Hohlkörper 14.1 weist eine Innenwand 16 bzw. eine Innenform 16 und eine Außenwand 18 bzw. eine Außenform 18 auf. Vorzugsweise ist die Außenform, also die bestimmte Form des Transponderaufnahmeelements 12.1 insbesondere derart gebildet, dass sie zu einer Innenform einer Aufnahme eines Objekts korrespondiert, in der die Transponderanordnung einsetzbar ist.

In den Ausführungsbeispielen gemäß den Figuren 2a bis 2d stellt das jeweilige Transponderaufnahmeelement 12 selber die Schutzumhüllung 12 dar.

In der Figur 2b ist ein Transponderaufnahmeelement 12.2 in Form eines quaderförmigen Hohlkörpers 14.2 dargestellt. Vorzugsweise kann die Innenwand 16 des quaderförmigen Hohlkörpers 14.2 an den Ecken Radien aufweisen. Grund hierfür ist, dass eine in der Aufnahme 12.2 angeordnete Transpondereinrichtung 2 bzw. das Trägerelement 4 an der Innenwand 16, insbesondere auch in den Eckbereichen, anliegen kann, ohne dass durch eine zu starke Biegung der Transpondereinrichtung 2 bzw. des Trägerelements diese/s beschädigt wird.

Figur 2c zeigt ein weiteres Transponderaufnahmeelement 12.3 in Form eines halben zylinderförmigen Hohlkörpers 14.3. Auch hier können in den Eckbereichen Radien vorgesehen sein.

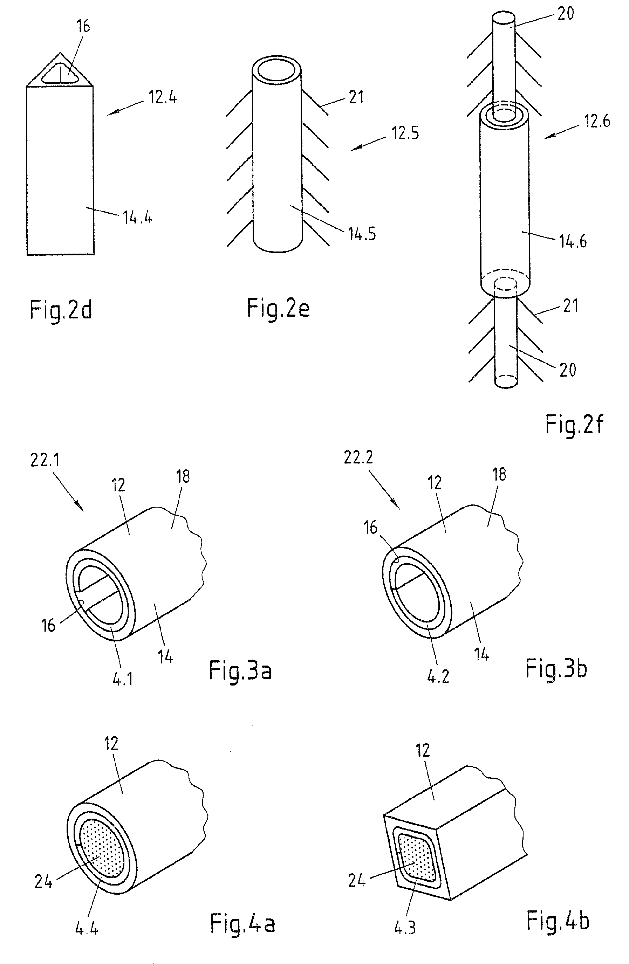

Ferner ist in Figur 2d ein Transponderaufnahmeelement 12.4 mit einer dreieckförmigen Querschnittsfläche abgebildet. Auch der dreieckförmige Hohlkörper 14.4 kann in den Eckbereichen Radien aufweisen.

Die Figur 2e zeigt ein Transponderaufnahmeelement 12.5 umfassend einen zylinderförmigen Hohlkörper 12.5. Der Hohlkörper 12.5 weist eine Mehrzahl an Widerhaken 21 auf. Mittels der Widerhaken 21 kann die Transponderanordnung in besonders einfacher und sicherer Weise in einen Hohlraum eines Objekts, wie einem Getränkekasten, integriert werden. Es versteht sich, dass zur Fixierung zusätzlich Klebstoff eingesetzt werden kann. Ferner versteht es sich, dass die Widerhaken 21 unabhängig von der Ausführungsform des Transponderaufnahmeelements bei (nahezu) jeder Form angeordnet werden können.

Schließlich zeigt Figur 2f ein Transponderaufnahmeelement 12.6 umfassend einen zylinderförmigen Hohlkörper 14.6, welcher im Wesentlichen dem Hohlkörper 14.1 gemäß der Figur 2a entspricht.

Zusätzlich weist das Transponderaufnahmeelement 12.5 im vorliegenden Ausführungsbeispiel zwei Verlängerungselemente 20 auf. Es versteht sich, dass auch nur ein Verlängerungselement 20 vorgesehen sein kann. Die Verlängerungselemente 20 können dazu dienen, die Transponderanordnung an eine bestimmte Position innerhalb einer Aufnahme eines Objekts zu positionieren. Die Verlängerung kann zum einen dazu dienen, die Transponderanordnung überhaupt an die richtige Position zu führen und zum anderen dazu, diese Position beizubehalten. Vorliegend weisen die Verlängerungselemente 20 zusätzlich Widerhaken 21 auf. Es versteht sich, dass auch nur ein Verlängerungselement 20 oder auch kein Verlängerungselement 20 Widerhaken 21 aufweisen kann.

Es versteht sich hierbei, dass für eine kompakte Transponderanordnung der Hohlkörper 14 möglichst dünnwandig gebildet sein kann. Beispielhafte Wanddicken liegen zwischen 0,1 mm und 2 mm.

Es versteht sich ferner, dass ein Transponderaufnahmeelement 12 einen Boden und einen Deckel zum Verschließen der Öffnung/en aufweisen kann. Der Deckel und/oder der Boden kann ein separates Bauteil oder integraler Bestandteil eines Transponderaufnahmeelements 12 sein. Ein vollständiges und insbesondere dichtes Umschließen ist möglich. Flüssigkeiten oder dergleichen können nicht in das Transponderaufnahmeelement eintreten.

Um die Transpondereinrichtung 2 bzw. das flexible Trägerelement 4 in einem Hohlkörper 14 anzuordnen, ist es erforderlich, die Transpondereinrichtung 2 bzw. das flexible Trägerelement 4 entsprechend umzuformen. Beispielsweise kann das Trägerelement 4 entsprechend gebogen und/oder gefaltet sein.

Die Figuren 3a und 3b zeigen beispielhaft an einem zylinderförmigen Hohlkörper 14 gemäß der Figur 2a die Anordnung einer Transpondereinrichtung 2 bzw. eines Trägerelements 4 innerhalb des Transponderaufnahmeelements 12.

Im ersten Ausführungsbeispiel einer Transponderanordnung 22.1 gemäß Figur 3a ist die Transpondereinrichtung 2 bzw. das flexible Trägerelement 4 derart gebogen, dass sie/es in dem Hohlkörper 14 angeordnet werden kann. Wie zu erkennen ist, liegt das Trägerelement 4.1 im Wesentlichen an der Innenwand 16 des Hohlkörpers 14 an. Insbesondere ist die Form des Trägerelements 4.1 an die Form des Hohlkörpers 14 angepasst. Durch das Umformen des Trägerelements 4.1 und der Anordnung innerhalb des Transponderaufnahmeelements 12 wird insgesamt ein kompakteres Design erzielt.

In dem vorliegenden Ausführungsbeispiel berühren sich die gebogenen Enden des Trägerelements 4.1 nicht. Mit anderen Worten sind die Enden des Trägerelements 4.1 voneinander beabstandet.

Ferner ist die Länge L des zylinderförmigen Transponderaufnahmeelements 12 im Wesentlichen gleich der Länge L des flexiblen Trägerelements 4. Mit anderen Worten ragt das Trägerelement 4 nicht aus der Öffnung des zylinderförmigen Hohlkörpers 14 hinaus. Vorzugsweise kann es nahezu bündig mit dem Rand der Öffnung des Hohlkörpers 14 abschließen. Die Breite B bzw. der Durchmesser B des zylinderförmigen Transponderaufnahmeelements 12 ist kleiner als die Länge L des flexiblen Trägerelements 4.

Es versteht sich, dass grundsätzlich auch die Länge L des zylinderförmigen Transponderaufnahmeelements 12 im Wesentlichen gleich der Breite B des flexiblen Trägerelements 4 und die Breite B bzw. der Durchmesser B des zylinderförmigen Transponderaufnahmeelements 12 kleiner als die Länge L des flexiblen Trägerelements 4 sein kann.

Im Ausführungsbeispiel gemäß der Figur 3b stehen die Enden des Trägerelements 4.2 hingegen in Kontakt zueinander. Mit anderen Worten kann der Umfang der Innenwand des Hohlkörpers 14 im Wesentlichen der Breite B (oder alternativ der Länge L) des flexiblen Trägerelements 4 entsprechen. Grundsätzlich können sich die Enden eines Trägerelements 4 auch überschneiden, solange sich die Antennenstruktur 6 nicht überschneidet. Hierdurch kann ein noch kompakteres Design bereitgestellt werden.

In den Figuren 4a und 4b sind weitere Ausführungsbeispiele von erfindungsgemäßen Transponderanordnungen 22.3 und 22.4 dargestellt. Im Unterschied zu den Ausführungsbeispielen gemäß den Figuren 3a und 3b weisen die Transponderanordnungen 22.3 und 22.4 gemäß den Figuren 4a und 4b ein Kernelement 24 bzw. Innenmaterial 24 auf. Vorzugsweise ist der gesamte Innenbereich mit einem Kernelement 24 gefüllt.

Es ist erkannt worden, dass durch ein Kernelement 24 nicht nur die Stabilität der Transponderanordnung 22.2, 22.3 erhöht, sondern auch die Leistungsfähigkeit der Transpondereinrichtung bei kleiner Geometrie verbessert werden kann, wenn ein spezielles Füllmaterial als Kernmaterial 24 eingesetzt wird. Insbesondere kann das Kernelement 24 vorzugsweise aus einem Material mit einer relativen Permittivität von zumindest größer als 1, vorzugsweise zumindest größer als 2, in einem Frequenzbereich von 860 MHz bis 960 MHz hergestellt sein.

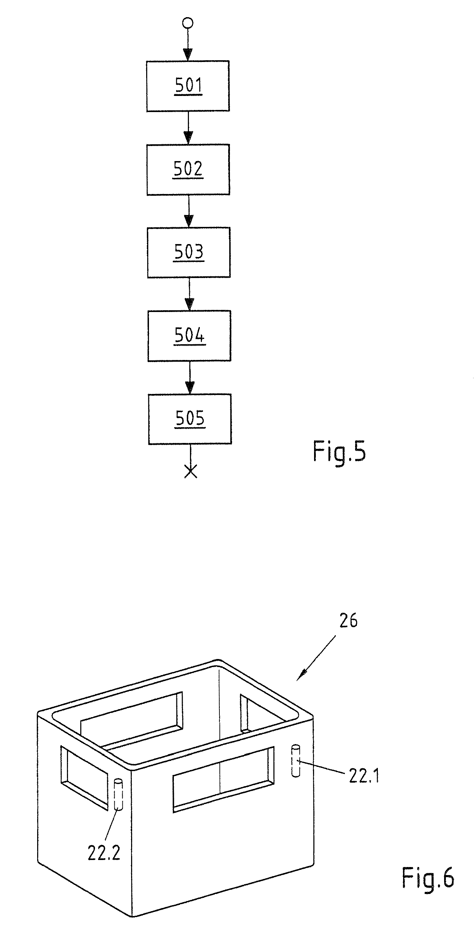

Figur 5 zeigt ein beispielhaftes Flussdiagramm eines Ausführungsbeispiels eines Verfahrens gemäß der Erfindung zur Herstellung einer Transponderanordnung, insbesondere einer zuvor beschriebenen Transponderanordnung 22.

In einem ersten Schritt 501 kann eine auf einem flexiblen Trägerelement 4 angeordnete Transpondereinrichtung 2 bereitgestellt werden. Diese kann insbesondere in vorherigen Arbeitsschritten hergestellt worden sein. Beispielsweise kann auf ein flexibles Trägerelement 4 zunächst die Antennenstruktur 6 und/oder das Anpassungsnetzwerk 8 aufgedruckt werden. Anschließend kann eine geeignete integrierte Schaltung 10 aufgebracht werden.

Die genauen geometrischen Maße der Antennenstruktur 6 und/oder des Anpassungsnetzwerks 8 können insbesondere in Abhängigkeit des Hüllmaterials bestimmt und optimiert werden. Vorzugsweise können Materialparameter des Hüllmaterials erfasst, beispielsweise berechnet und/oder gemessen werden, und bei der Herstellung der Transpondereinrichtung 2 berücksichtigt werden.

In einem weiteren Schritt 502 kann ein Transponderaufnahmeelement 12 beispielsweise in Form eines Hohlkörpers 14 bereitgestellt werden. Das Transponderaufnahmeelement 12 kann in vorherigen Arbeitsschritten hergestellt worden sein. Insbesondere kann die (Außen-)Form des Transponderaufnahmeelements 12 derart gebildet werden, dass diese mit einer (Innen-)Form einer Aufnahme eines Objekts, in welches die Transponderanordnung 22 eingesetzt werden soll, korrespondiert.

Das Trägerelement 4 mit der Transpondereinrichtung 2 kann in einem nächsten Schritt 503 umgeformt, beispielsweise gebogen oder gefaltet werden, derart, dass das Trägerelement 4 eine bestimmte Form einnimmt. Insbesondere wird das Trägerelement 4 ausgehend von der in Figur 1 dargestellten Ausgangsform derart umgeformt, dass es in den Hohlkörper 14 mit einer vorgebbaren (Innen-)Form des Transponderaufnahmeelements 12 eingeführt werden kann.

Beispielsweise kann das Trägerelement 4 in eine zylinderförmige Form gebracht werden, um es in einen zylinderförmigen Hohlkörper 14 einzubringen. Hierbei wird die Breite B und/oder die Länge L des Trägerelements 4 reduziert.

Anschließend wird das umgeformte Trägerelement 4 in den Hohlkörper 14 eingesetzt (Schritt 504). In einem weiteren Schritt 505 kann zusätzlich die Öffnung des Hohlkörpers 14 mit einem Deckel verschlossen werden.

Optional kann die Transponderanordnung 22.3, 22.4 auch mit einem Kernmaterial 24 versehen werden. Beispielsweise kann ein entsprechendes Kernelement 24, wie ein stabförmiger Kern 24 mit einer zu dem Hohlkörper 14 korrespondierenden Form, zunächst bereitgestellt werden. Mit anderen Worten kann ein zylinderförmiger Kern 24 für einen zylinderförmigen Hohlkörper 14 (Fig. 4a) und ein quaderförmiger Kern 24 für einen quaderförmigen Hohlkörper 14 (Fig. 4b) etc. bereitgestellt werden.

Dann kann das flexible Trägerelement 4 auf das Kernelement 24 angebracht und insbesondere entsprechend verbogen und/oder gefaltet werden. Beispielsweise kann für eine dauerhafte Verbindung zwischen Kernelement 24 und Trägerelement 4 eine Klebeschicht zwischen dem Trägerelement 4 und dem Kernmaterial 24 vorgesehen sein. Dann kann das Trägerelement 4 zusammen mit dem Kernelement 24 entsprechend Schritt 504 in den Hohlkörper 14 eingesetzt werden.

Alternativ kann ein Kernelement 24 auch erst nach dem Umformen und Einsetzen des Trägerelements 4 in den Hohlkörper 14 eingeführt werden. Beispielsweise kann ein stabförmiger Kern 24 nachträglich eingesetzt werden. Alternativ oder zusätzlich kann eine flüssige Masse, wie einer Kunststoffmasse, in den verbleibenden Hohlraum gefüllt werden. Diese kann dann beispielsweise durch eine Aktivierung aushärten.

Die so hergestellte Transponderanordnung 22 kann dann in ein Objekt, insbesondere in eine Aufnahme des Objekts eingesetzt werden.

In der Figur 6 ist ein beispielhaftes Objekt 26 mit einer Transponderanordnung 22 dargestellt. Vorzugsweise kann pro Objekt eine Transponderanordnung 22 an der Position 22.1 oder 22.2 angeordnet werden. Es versteht sich, dass grundsätzlich auch eine Mehrzahl von Transponderanordnungen vorgesehen sein kann.

Das Objekt 26 kann beispielsweise ein Getränkekasten 26 sein. Getränkekästen 24 weisen aus Gewichtsgründen (ohnehin) Hohlräume mit einer bestimmten Form auf. Durch eine Anpassung der Form des Transponderaufnahmeelements 12 an die Form der Hohlräume des Objekts 26, kann in einfacher Weise eine Transpondereinrichtung 2, welche aufgrund des flexiblen Trägerelements 4 eine entsprechende Form des Transponderaufnahmeelements 12 annimmt, in einem derartigen Hohlraum angeordnet werden.

## Patentansprüche

1. Transponderanordnung (22) für die Integration in einem Objekt (26), umfassend:
- mindestens ein flexibles Trägerelement (4) mit zumindest einer Transpondereinrichtung (2), welche mindestens eine Antennenstruktur (6) aufweist,
- ein Transponderaufnahmeelement (12) zum Umschließen des flexiblen Trägerelements (4),
- wobei das Transponderaufnahmeelement (12) eine bestimmte Form aufweist, und
- wobei das flexible Trägerelement (4) derart umgeformt ist, dass das flexible Trägerelement (4) innerhalb des Transponderaufnahmeelements (12) angeordnet ist.

2. Transponderanordnung (22) nach Anspruch 1, **dadurch gekennzeichnet, dass** das flexible Trägerelement (4) derart umgeformt ist, dass die Länge und/oder die Breite des flexiblen Trägerelements (4) im Vergleich zu der Länge und/oder Breite einer Ausgangsform des flexiblen Trägerelements (4) reduziert ist.

3. Transponderanordnung (22) nach Anspruch 1 oder 2, **dadurch gekennzeichnet, dass** das Transponderaufnahmeelement (12) ein Hohlkörper (14) ist.

4. Transponderanordnung (22) nach einem der vorherigen Ansprüche, **dadurch gekennzeichnet, dass** die bestimmte Form des Transponderaufnahmeelements (12) zu der Form einer Aufnahme eines Objekts (26) korrespondiert, in der die Transponderanordnung (22) einsetzbar ist.

5. Transponderanordnung (22) nach einem der vorherigen Ansprüche, **dadurch gekennzeichnet, dass**
- das Transponderaufnahmeelement (12) quaderförmig ist, oder
- das Transponderaufnahmeelement (12) zylinderförmig ist, oder,
- das Transponderaufnahmeelement (12) mehreckig, insbesondere dreieckig ist.

6. Transponderanordnung (22) nach einem der vorherigen Ansprüche, **dadurch gekennzeichnet, dass** das Trägerelement (4) zumindest teilweise an einer Innenwand (16) des Transponderaufnahmeelements (12) anliegt.

7. Transponderanordnung (22) nach einem der vorherigen Ansprüche, **dadurch gekennzeichnet, dass**
- ein Kernelement (24) vorgesehen ist, welches innerhalb des Transponderaufnahmeelements (12) angeordnet ist,
- wobei das Kernelement (24) vorzugsweise aus einem Material mit einer relativen Permittivität von zumindest größer als 1, vorzugsweise zumindest größer als 2, in einem Frequenzbereich von 860 MHz bis 960 MHz hergestellt ist.

8. Transponderanordnung (22) nach einem der vorherigen Ansprüche, **dadurch gekennzeichnet, dass** das Transponderaufnahmeelement (12) ein Verlängerungselement (20) aufweist.

9. Transponderanordnung (22) nach einem der vorherigen Ansprüche, **dadurch gekennzeichnet, dass** das Transponderaufnahmeelement (12) mindestens einen Widerhaken (21) aufweist.

10. Objekt (26) mit mindestens einer integrierten Transponderanordnung (22) gemäß einem der vorherigen Ansprüche.

11. Verfahren zur Herstellung einer Transponderanordnung (22), umfassend:
- Bereitstellen von mindestens einem flexiblen Trägerelement (4) mit zumindest einer Transpondereinrichtung (2), welche mindestens eine Antennenstruktur (6) aufweist, in einer Ausgangsform,
- Bereitstellen eines Transponderaufnahmeelements (12) zum Umschließen des Trägerelements (4), wobei das Transponderaufnahmeelement (12) eine bestimmte Form aufweist,
- Umformen des Trägerelements (4) aus der Ausgangsform in eine Endform, und
- anschließendes Einführen des Trägerelements (4) in der Endform in das Transponderaufnahmeelement (12).
